# EUROPEAN PATENT APPLICATION

(11) **EP 3 733 496 A1**
(43) Date of publication of application: **04.11.2020**
(21) Application number: 18897403.4
(22) Date of filing: 19.11.2018
(51) Int. Cl.: B62M 7/12, B60K 7/00, B60T 1/06, B62K 25/20

(54) **SADDLED ELECTRIC VEHICLE**

(30) Priority: 29.12.2017 JP 2017255155
(71) Applicant: YAMAHA HATSUDOKI KABUSHIKI KAISHA, Iwata-shi Shizuoka 438-8501 (JP)
(72) Inventor: TERADA, Junji, Iwata-shi, Shizuoka 438-8501 (JP); KAMO, Shinichi, Iwata-shi, Shizuoka 438-8501 (JP); ISHIKAWA, Hideki, Iwata-shi, Shizuoka 438-8501 (JP)
(74) Representative: Grünecker Patent- und Rechtsanwälte PartG mbB
(86) International application number: PCT/JP2018/042624
(87) International publication number: WO 2019/130903

(57) **Abstract**

An electric two-wheeled vehicle (1) includes a rear arm (70) that supports a left end (31r) of an axle (31) and does not support a right end (31a) of the axle (31), and an electric motor (30) that includes a stator frame (32) including an fixed portion (32a) fixed to the axle (31), a stator (33) attached to the stator frame (32), and a rotor (34) rotatably supported by the axle (31) and connected to a rear wheel (20) to rotate integrally with the rear wheel (20), in which the fixed portion (32a) of the stator frame (32) is shifted to the right from a center (C1) of the rear wheel (20) in a left-right direction.

## Description

### TECHNICAL FIELD

The present disclosure relates to a straddled electric vehicle.

### BACKGROUND ART

Patent Literature 1 proposes a two-wheeled vehicle in which an electric motor for driving a rear wheel is provided on an axle of the rear wheel. (The two-wheeled vehicle is an electric two-wheeled vehicle of a so-called in-wheel motor type.) In the vehicle of Patent Literature 1, the rotor of the electric motor and the rear wheel are connected without a speed reduction mechanism. Such a structure is called a direct drive system. With such structure, power loss due to the speed reduction mechanism does not occur, and thus the rear wheel can be efficiently driven.

### CITATION LIST

### PATENT LITERATURE

Patent Literature 1: JP 2012-206710 A

### SUMMARY OF THE INVENTION

### TECHNICAL PROBLEM

An electric two-wheeled vehicle includes a rear arm that supports the axle of a rear wheel. In the vehicle of Patent Literature 1, the rear arm supports the right end and the left end of the axle. Such structure is not necessarily the best in terms of manufacturing cost and workability in maintenance.

One of the objects of the present invention is to provide a straddled electric vehicle that can increase the support strength of an axle and is superior to vehicles of the related art in terms of workability such as maintenance and cost.

### SOLUTION TO PROBLEM

(1) One embodiment of a straddled electric vehicle proposed in the present disclosure includes a wheel, an axle that includes a first end in a first direction which is one of right and left directions, and a second end in a second direction which is the other direction of the right and left directions, an arm that is connected to a body frame, supports the first end of the axle, and does not support the second end of the axle, and an electric motor that includes a stator frame including an fixed portion fixed to the axle, a stator attached to the stator frame, and a rotor rotatably supported by the axle and connected to the wheel to rotate integrally with the wheel. The fixed portion of the stator frame is shifted in the second direction from a center of the wheel in a left-right direction. According to the present embodiment, since one of the two ends (first end and second end) of the axle is not supported by the arm, a straddled electric vehicle that is superior to the vehicle of the related art in terms of workability in maintenance or manufacturing cost can be obtained. Since the fixed portion of the stator frame is shifted in the second direction (the direction with an end not supported by the arm), the portion of the arm that supports the axle can be brought closer to the center of the wheel in the left-right direction. As a result, it is easy to increase the support strength of the axle. The present embodiment may be applied to a vehicle in which a front wheel is driven by an electric motor, or may be applied to a vehicle in which a rear wheel is driven by an electric motor. The present embodiment may be applied to not only a two-wheeled vehicle but also a three-wheeled vehicle that includes two front wheels and whose rear wheel is driven by an electric motor, and a three-wheeled vehicle that includes two rear wheels and whose front wheel is driven by an electric motor.
(2) The straddled electric vehicle of (1) may further include a motor housing that accommodates the rotor and the stator and is rotatably supported by the axle. The rotor may be fixed on the inside of the motor housing, and the wheel may be fixed on the outside of the motor housing. In the vehicle, a part of the outer wall of the motor housing may be configured by a wheel rim.
(3) In the straddled electric vehicle of (1) or (2), the stator may be located further in the first direction than the fixed portion of the stator frame. According to the vehicle, the positional deviation between the stator and the wheel in the left-right direction can be reduced. As a result, it is possible to prevent the electric motor and the motor housing from significantly protruding in the second direction from the wheel.
(4) The straddled electric vehicle according to any one of (1) to (3) may further include a first bearing that is located in the first direction of the fixed portion of the stator frame and rotatably supports the rotor. At least a part of the first bearing may be located inwardly of the stator in a radial direction of the axle. According to the vehicle, the size of the mechanism (including the electric motor) provided on the axle in the left-right direction can be reduced.
(5) The straddled electric vehicle of (4) may further include a second bearing that is located in the second direction of the fixed portion of the stator frame and rotatably supports the rotor, in which the first bearing may be located in the first direction of a center of the wheel in a left-right direction, and the second bearing may be located in the second direction of the center of the wheel in the left-right direction. According to the vehicle, it is possible to prevent the load from acting on only one of the two bearings.
(6) In the straddled electric vehicle of (5), a distance from the first bearing to the center of the wheel in the left-right direction may be smaller than a distance from the second bearing to the center of the wheel in the left-right direction. A width of the first bearing in the left-right direction may be larger than a width of the second bearing in the left-right direction. According to the vehicle, the first bearing can receive a large load.
(7) In the straddled electric vehicle according to any one of (1) to (6), the arm may include an axle holding portion supporting the first end of the axle, and a plurality of ribs may be formed on an outer peripheral surface of the axle holding portion. According to the vehicle, the support strength of the axle can be increased.
(8) In the straddled electric vehicle of (2) or (3), the arm may include an axle holding portion supporting the first end of the axle, the motor housing may include a wall portion facing the first direction, the wall portion of the motor housing may include a recessed portion, and an end of the axle holding portion may be located inside the recessed portion of the wall portion of the motor housing. According to the vehicle, since the position of the end of the axle holding portion can be brought closer to the center of the wheel in the left-right direction, the support strength of the axle can be increased.
(9) In the straddled electric vehicle of (1) to (8), the arm may include an axle holding portion supporting the first end of the axle, and a side wall portion in which the axle holding portion is formed and through which the axle passes, and the side wall portion may be located in the second direction of a center of the axle holding portion in a left-right direction. According to the vehicle, since the position of the side wall portion is close to the center of the wheel in the left-right direction, the support strength of the axle can be increased.
(10) The straddled electric vehicle according to any one of (1) to (9) may further include a brake device that is placed in the first direction of the electric motor. The arm may include an axle holding portion supporting the first end of the axle, and a part of the axle holding portion may overlap with the brake device when viewed in a direction orthogonal to the axle. According to the vehicle, since the position of the end of the axle holding portion is close to the center of the wheel in the left-right direction, the support strength of the axle can be increased.
(11) The straddled electric vehicle according to any one of (1) to (10) may further include a brake device that is placed in the first direction of the electric motor. At least a part of the brake device may be located inwardly of the stator in a radial direction of the axle. According to the vehicle, the size of the mechanism (including the electric motor and the brake device) provided on the axle in the left-right direction can be reduced.
(12) The straddled electric vehicle of (2) or (3) may include a brake device that is placed in the first direction of the motor housing. The motor housing may include a wall portion facing in the first direction, the wall portion of the motor housing may include a recessed portion, and at least a part of the brake device may be located in the recessed portion of the wall portion of the motor housing. According to the vehicle, the size of the mechanism (including the electric motor and the brake device) provided on the axle in the left-right direction can be reduced.
(13) The straddled electric vehicle of (12) may further include a first bearing that is located in the first direction of the fixed portion of the stator frame and rotatably supports the rotor. At least a part of the first bearing may be located closer to a center of the wheel in a left-right direction than the brake device.
(14) Another embodiment of the straddled electric vehicle proposed in the present disclosure includes a wheel, an arm, an axle that is supported by the arm, a bearing that is provided on the axle, and an electric motor that includes a stator frame including an fixed portion fixed to the axle, a stator held by the stator frame, and a rotor that is rotatably supported via the bearing and connected to the wheel to rotate integrally with the wheel, in which the bearing is located in a first direction which is one of the left direction and right direction of the fixed portion, the fixed portion of the stator frame is shifted from a center of the wheel in a left-right direction in a second direction which is the other direction of the left direction and the right direction, and at least a part of the bearing overlaps with the stator when viewed in a direction orthogonal to the axle. According to the vehicle, the size of the mechanism (including the electric motor) for driving the wheel provided on the axle in the left-right direction can be reduced. In the present embodiment, both the right end and the left end of the axle may be supported by the arm. The present embodiment may be applied to a vehicle in which a front wheel is driven by an electric motor, or may be applied to a vehicle in which a rear wheel is driven by an electric motor. The present embodiment may be applied to not only a two-wheeled vehicle but also a three-wheeled vehicle that includes two front wheels and whose rear wheel is driven by an electric motor, and a three-wheeled vehicle that includes two rear wheels and whose front wheel is driven by an electric motor.
(15) Still another embodiment of the straddled electric vehicle proposed in the present disclosure includes a wheel, an axle of the wheel, an arm that is connected to a body frame and supports an end of the axle, a bearing that is disposed on the axle, a motor housing rotatably supported by the axle via the bearing, and an electric motor that includes a rotor rotatable together with the motor housing around the axle, a stator frame fixed to the axle, and a stator attached to the stator frame and is accommodated in the motor housing. The motor housing includes a side wall portion located to the right or the left of the electric motor and covering the electric motor. At least a part of the bearing is located inside the stator in a radial direction of the axle and is located between a center of the wheel in a left-right direction and the side wall portion of the motor housing. According to the present embodiment, the width of the entire device including the electric motor and the motor housing in the left-right direction can be reduced. The present embodiment may be applied to a vehicle in which a front wheel is driven by an electric motor, or may be applied to a vehicle in which a rear wheel is driven by an electric motor. The present embodiment may be applied to not only a two-wheeled vehicle but also a three-wheeled vehicle that includes two front wheels and whose rear wheel is driven by an electric motor, and a three-wheeled vehicle that includes two rear wheels and whose front wheel is driven by an electric motor.

### BRIEF DESCRIPTION OF THE DRAWINGS

[Fig. 1] Fig. 1 is a side view illustrating an example of a straddled electric vehicle proposed in the present disclosure.
[Fig. 2] Fig. 2 is a perspective view illustrating a rear wheel, an electric motor, and a rear arm.
[Fig. 3] Fig. 3 is a perspective view illustrating the rear wheel, the electric motor, and the rear arm, in which the rear wheel and a housing of the electric motor are separated.
[Fig. 4] Fig. 4 is a side view illustrating the rear wheel, the electric motor, and the rear arm.
[Fig. 5A] Fig. 5A is a cross-sectional view taken along the line VA-VA illustrated in Fig. 4.
[Fig. 5B] Fig. 5B is an enlarged view of Fig. 5A.
[Fig. 6] Fig.6 is a perspective view illustrating the inside of a component housing configured by the rear arm.
[Fig. 7] Fig. 7 is a perspective view illustrating an arm rear member that constitutes the component housing. In Fig. 7, the side facing a motor housing is illustrated.
[Fig. 8] Fig. 8 is a perspective view illustrating the arm rear member to which a brake shoe is attached.
[Fig. 9] Fig. 9 is a cross-sectional view illustrating a modification example of a cable passage formed on the axle.
[Fig. 10] Fig. 10 is a cross-sectional view illustrating a modification example of a straddled electric vehicle.

### DETAILED DESCRIPTION OF THE INVENTION

Hereinafter, an example of the straddled electric vehicle proposed in the present disclosure will be described. In the present specification, an electric two-wheeled vehicle is described as an example of a straddled electric vehicle. The straddled electric vehicle may be an electric three-wheeled vehicle, an electric four-wheeled vehicle, or the like.

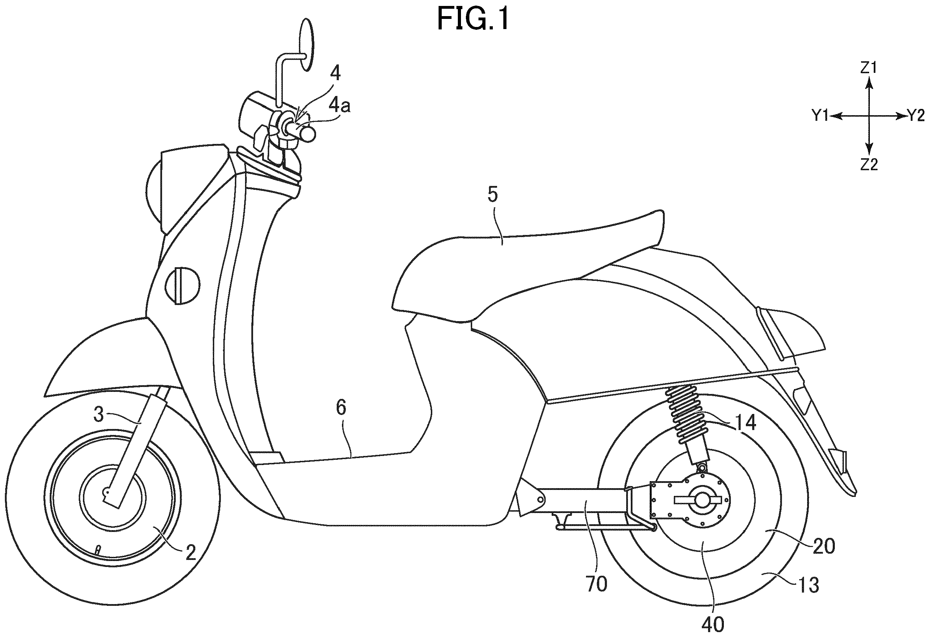

In Figs. 1 to 8, the directions indicated by Y1 and Y2 are referred to as frontward direction and rearward direction, respectively, and the directions indicated by Z1 and Z2 are referred to as upward direction and downward direction, respectively. The directions indicated by X1 and X2 are referred to as the rightward direction and leftward direction, respectively.

An electric two-wheeled vehicle 1 is an example of an embodiment of the electric vehicle proposed in the present disclosure. In the electric two-wheeled vehicle 1, a rear arm 70 is placed on the left side of a rear wheel 20. Depending on the positional relationship between the rear wheel 20 and the rear arm 70, the positional relationships in the left-right direction of a plurality of components, a plurality of members, and a plurality of portions are illustrated. These positional relationships may be opposite in the left-right direction. That is, in the following description, "right" may be read as "left" and "left" may be read as "right".

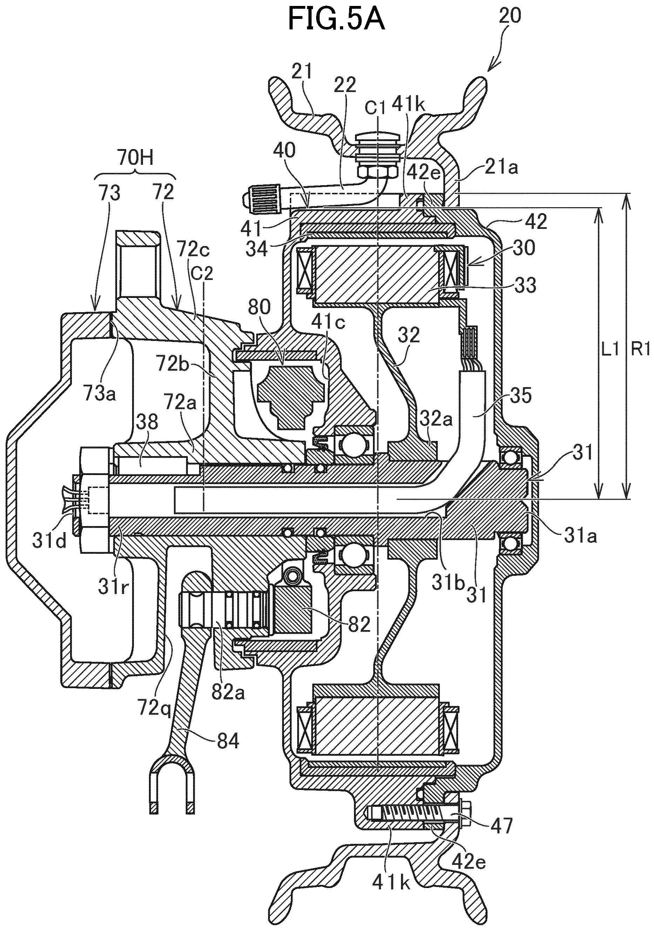

As illustrated in Fig. 1, the electric two-wheeled vehicle 1 includes a front wheel 2, a front fork 3 supporting the front wheel 2, and a handlebar 4 connected to an upper portion of the front fork 3. Grips 4a are provided on the right and left ends of the handlebar 4. For example, one grip (right grip 4a) is an accelerator grip, and a rider can adjust the output of an electric motor 30 (see Fig. 5A) described later through the right grip 4a. A seat 5 is placed behind the handlebar 4. The electric two-wheeled vehicle 1 is a so-called scooter type vehicle, and between the seat 5 and the front fork 3, a space for the rider to put his or her feet and a foot board 6 for putting his or her feet are provided. The electric two-wheeled vehicle 1 may not be a scooter type vehicle. That is, the electric two-wheeled vehicle 1 may be a vehicle that allows the rider to ride while sandwiching the vehicle body with his or her feet.

### [Rear Wheel and Rear Arm]

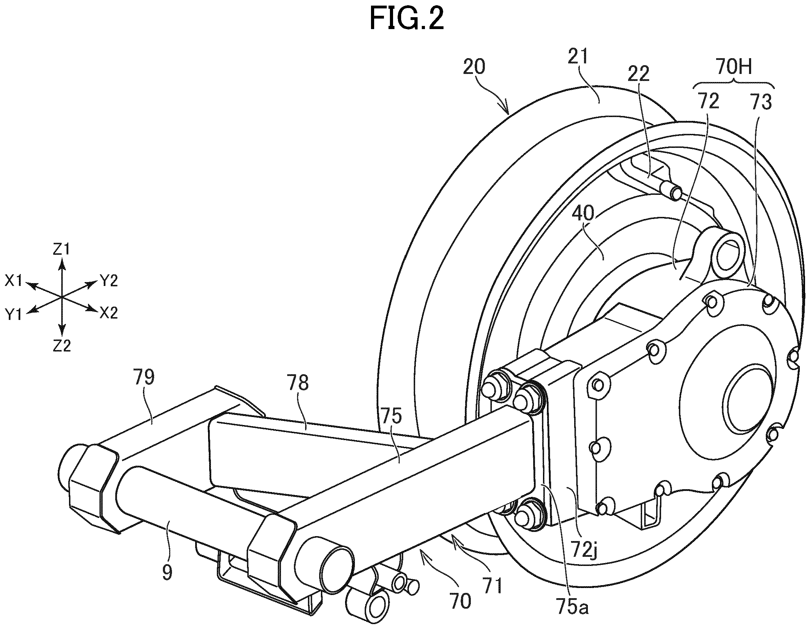

As illustrated in Fig. 1, the electric two-wheeled vehicle 1 includes the rear wheel 20 and the rear arm 70 that supports the rear wheel 20 so that the rear wheel 20 can move up and down, at a rear portion thereof. A tire 13 is attached to the rear wheel 20. A pivot shaft 9 (see Fig. 2) is provided at the front end of the rear arm 70. The rear arm 70 is connected to the vehicle body frame via the pivot shaft 9 and can move up and down about the pivot shaft 9. The rear arm 70 supports an axle 31 (see Fig. 5A) of the rear wheel 20. The electric two-wheeled vehicle 1 includes an electric motor 30 (see Fig. 5A) that drives the rear wheel 20. The electric two-wheeled vehicle 1 is an in-wheel motor type vehicle, and thus the electric motor 30 is placed on the axle 31 and is located inside the rear wheel 20. The electric two-wheeled vehicle 1 includes a battery (not illustrated) and an inverter. The direct current supplied from the battery is converted into alternating current by the inverter to be supplied to the electric motor 30.

The rear arm 70 is placed only to one of the right and the left of the rear wheel 20 and supports only one of the right end and the left end of the axle 31. That is, the axle 31 is supported like a cantilever. In the exampled electric two-wheeled vehicle 1, the rear arm 70 is placed only on the left of the rear wheel 20 and supports only a left end 31r of the axle 31 (see Fig. 5A). As illustrated in Fig. 2, the rear arm 70 includes a left arm 71 extending rearward from the left portion of the pivot shaft 9 and a right arm 79 extending rearward from the right portion of the pivot shaft 9. A rear portion of the left arm 71 (specifically, an arm rear member 72 described later) is located to the left of the rear wheel 20 and supports a left end 31r of the axle 31 of the rear wheel 20 (see Fig. 5A). The rear portion of the left arm 71 includes a cylindrical portion 72a, and the left portion of the axle 31 is inserted inside the portion 72a (see Fig. 5A, hereinafter, the portion 72a is referred to as a "axle holding portion").

The right arm 79 is shorter than the left arm 71, and the rear end of the right arm 79 does not reach the axle 31. In the exampled electric two-wheeled vehicle 1, the rear end of the right arm 79 is located in front of the rear wheel 20. Therefore, a right end 31a of the axle 31 is not supported by the right arm 79. That is, the right arm 79 is not connected to the right end 31a of the axle 31. The axle 31 may be a single member that is continuous from the right end 31a to the left end 31r.

With the structure in which only one end of the axle 31 is supported by the rear arm 70 as described above, for example, at the time of maintenance work or repair work, an operator can easily access the rear wheel 20 and the rear tire 13, and thus workability of the works can be improved. Further, as will be described later in detail, the number of seal members required for a motor housing 40 can be reduced.

In the present specification, the sentence " the left end 31r of the axle 31 is supported" means that the axle holding portion 72a of the rear arm 70, which supports the axle 31, is located further leftward than the electric motor 30 described later. Therefore, the left end 31r of the axle 31 may be located on the axle holding portion 72a or may protrude leftward from the axle holding portion 72a. Further, the sentence "the right end 31a of the axle 31 is not supported" means that the rear arm 70 is not connected to a portion of the axle 31 located further rightward than the electric motor 30.

As illustrated in Fig. 2, the rear arm 70 includes a connecting bar 78 located in front of the rear wheel 20. The connecting bar 78 is stretched between the right arm 79 and the left arm 71. The rear arm is not limited to the example of the electric two-wheeled vehicle 1. For example, the right arm 79 may include a portion that overlaps with the rear wheel 20 in a side view of the vehicle body, although the right arm 79 is not connected to the axle 31. In another example, the rear arm 70 may support the right end 31a of the axle 31 and may not support the left end 31r of the axle 31, contrary to the example of Fig. 5A. In still another example, the rear arm 70 may not include the right arm 79 or the connecting bar 78.

### [Outline of Electric Motor]

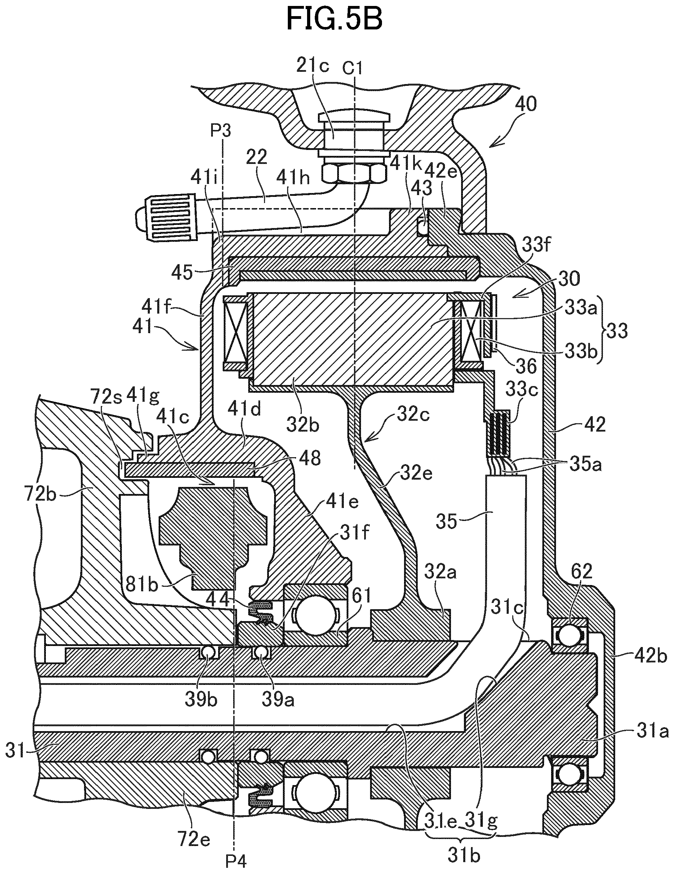

As described above, the electric motor 30 is placed on the axle 31. As illustrated in Fig. 5A, the electric motor 30 includes a stator 33 and a rotor 34 rotatable about the axle 31. The rotor 34 is located radially outward of the stator 33, and the rotor 34 and the stator 33 face each other in the radial direction. As illustrated in Fig. 5B, the stator 33 includes a plurality of iron cores 33a arranged in the circumferential direction of the axle 31 and a coil 33b wound around each iron core 33a. The rotor 34 includes a plurality of permanent magnets 34a arranged in the circumferential direction of the axle 31.

As illustrated in Fig. 5A, the electric motor 30 includes a stator frame 32 that supports the stator 33. The stator frame 32 includes a fixed portion 32a fixed to the axle 31. The stator 33 is supported by the stator frame 32, whereby the rotational position of the stator 33 is fixed. The axle 31 cannot rotate relative to the rear arm 70 (more specifically, the arm rear member 72 that constitutes the left arm 71). As illustrated in Fig. 5A, the rear arm 70 includes a cylindrical axle holding portion 72a. The axle 31 is inserted into the axle holding portion 72a and cannot rotate relative to the axle holding portion 72a. In the exampled electric two-wheeled vehicle 1, a key groove extending in the axial direction is formed on the outer peripheral surface of the axle 31 and the inner peripheral surface of the axle holding portion 72a, and an engaging member 38 is placed in the key groove. The engaging member 38 engages with the outer peripheral surface of the axle 31 and the inner peripheral surface of the axle holding portion 72a to restrict the relative rotation thereof. The structure for restricting the rotation of the axle 31 is not limited to the example illustrated in Fig. 5A.

### [Motor Housing and Seal Structure of the Same]

As illustrated in Fig. 5A, the electric two-wheeled vehicle 1 includes the motor housing 40 that accommodates the rotor 34 and the stator 33. The motor housing 40 is rotatably supported by bearings 61 and 62 provided on the axle 31. The rotor 34 (permanent magnet 34a) is affixed inside the motor housing 40 and is rotatably supported via the motor housing 40 and the bearings 61 and 62. The rear wheel 20 is fixed to the outside of the motor housing 40 by a fixing tool such as a bolt or a screw. Therefore, there is no speed reduction mechanism in the power transmission path between the rotor 34 and the rear wheel 20, and the rotor 34 rotates integrally with the rear wheel 20. That is, the rotation speed of the rotor 34 and the rotation speed of the rear wheel 20 are the same. In other words, the electric two-wheeled vehicle 1 is a direct drive type vehicle.

As illustrated in Fig. 5A, the motor housing 40 includes a left housing member 41 and a right housing member 42 that are combined with each other in the left-right direction. The left housing member 41 is located to the left of the electric motor 30 and covers the left side of the electric motor 30. The right housing member 42 is located to the right of the electric motor 30 and covers the right side of the electric motor 30. The left housing member 41 has a box shape that is open toward the right side and is circular in a side view. The right housing member 42 has a box shape that is open toward the left side and is circular in a side view.

As illustrated in Fig. 5A, the left end 31r of the axle 31 is located outside the motor housing 40 and is supported by the rear arm 70 (more specifically, the cylindrical axle holding portion 72a). Therefore, the axle 31 penetrates the left housing member 41. That is, an opening is formed at the center of the left housing member 41, and the axle 31 passes through the inside of this opening. A seal member 44 (see Fig. 5B) is placed between the inner peripheral surface of the opening of the left housing member 41 and the outer peripheral surface of the axle 31. The seal member 44 is, for example, an oil seal. In the exampled electric two-wheeled vehicle 1, an annular member 31f is fitted on the outside of the axle 31. The seal member 44 is placed between the annular member 31f and the inner peripheral surface of the opening of the left housing member 41 and seals therebetween. The annular member 31f may not be provided on the axle 31. The bearing 61 is placed between the inner peripheral surface of the opening of the left housing member 41 and the axle 31. The seal member 44 is located outward in the left-right direction (located leftward) of the left bearing 61.

As described above, the right end 31a of the axle 31 is not supported by the rear arm 70. Therefore, as illustrated in Fig. 5A, the right end 31a of the axle 31 does not penetrate the right housing member 42. That is, the right end 31a of the axle 31 is located inside the motor housing 40, and the right housing member 42 covers the right side of the right end 31a. Therefore, unlike the left housing member 41, the right housing member 42 does not require a seal member. The number of seal members required between the motor housing 40 and the outer peripheral surface of the axle 31 can be reduced. As a result, frictional resistance against rotation of the rotor 34 (rotation of the motor housing 40) is reduced, and thus the electric motor 30 can be efficiently driven. The bearing 62 is fitted on the right end 31a of the axle 31, and the right housing member 42 is rotatably supported by the axle 31 via the bearing 62. A recessed portion 42b is formed at the center of the right housing member 42, and the bearing 62 is placed inside this recessed portion.

Each of the left housing member 41 and the right housing member 42 is a member integrally formed of metal. That is, the left housing member 41 is not configured by a plurality of members fixed to each other by a fixing tool such as a screw or a bolt. Similarly, the right housing member 42 is not configured by a plurality of members fixed to each other by a fixing tool such as a screw or a bolt. Therefore, the outer wall of the motor housing 40 is configured by only two members (housing members 41 and 42).

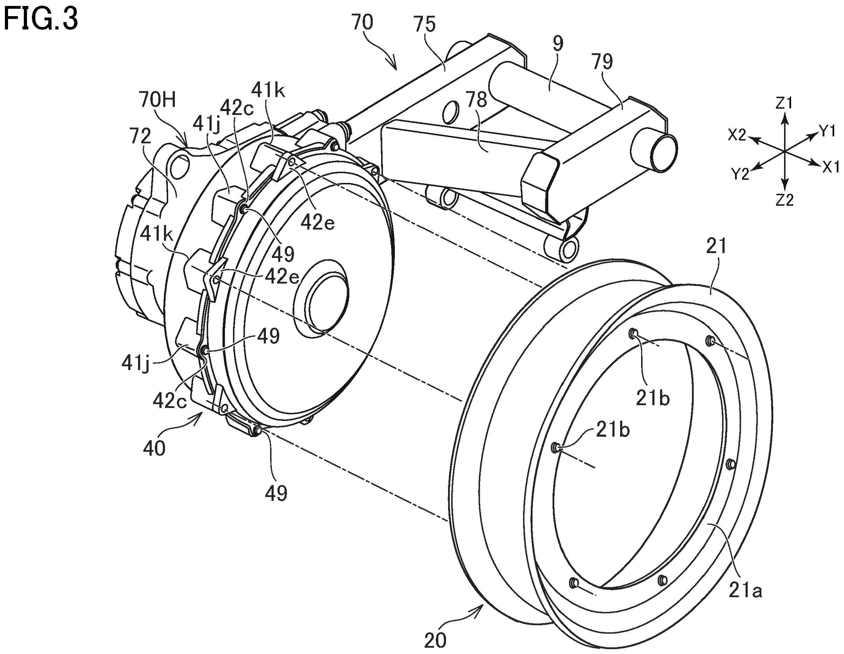

As illustrated in Fig. 5B, the left housing member 41 includes a flange portion 41a at the right edge portion thereof, which protrudes from the outer peripheral surface in the radial direction. Similarly, the right housing member 42 includes a flange portion 42a at the left edge thereof, which protrudes from the outer peripheral surface in the radial direction. The flange portions 41a, 42a are fixed to each other by a plurality of fixing tools 49 (see Fig. 3) such as bolts and screws. A ring-shaped seal member 43 is placed between the flange portion 41a of the left housing member 41 and the flange portion 42a of the right housing member 42. Since the flange portions 41a and 42a protrude in the radial direction from the outer peripheral surfaces of the housing members 41 and 42, the seal member 43 can be easily placed. Unlike the electric two-wheeled vehicle 1, the right edge portion of the left housing member 41 and the left edge portion of the right housing member 42 may not be formed in a flange shape.

The rotor 34 is fixed to the inside of one of the two housing members 41 and 42. In the electric two-wheeled vehicle 1, the rotor 34 is fixed inside the left housing member 41. The structure of the motor housing 40 can reduce the number of sealing members required. For example, in a structure of a related art in which the rotor is fixed to the rim portion of the rear wheel and each of the right and left housing members is fixed to the rim portion, two sealing members (a seal member between the rim portion and the right housing member, and a seal member between the rim portion and the left housing member) are required. On the other hand, in the motor housing 40, the rotor 34 is fixed on the inside of one of the housing members, and the two housing members 41 and 42 are directly fixed to each other, and thus one sealing member therebetween is sufficient.

By the structure described above, the accommodation chamber inside the motor housing 40 (the accommodation chamber in which the rotor 34 and the stator 33 are placed) is partitioned from the outside. That is, the seal members 43 and 44 that prevent water from entering the motor housing 40 from the outside are placed at the edges of the members that define the accommodation chamber. The seal members 43 and 44 are formed, for example, in an annular shape along the edges of the housing members 41 and 42. The material of the seal members 43 and 44 is not particularly limited. The seal members 43 and 44 may be made of metal or resin. The seal members 43 and 44 may be applied to the edges of the housing members 41 and 42.

As illustrated in Fig. 5A, the width of the left housing member 41 in the left-right direction is larger than the width of the right housing member 42 in the left-right direction. The rotor 34 is fixed on the inside of the left housing member 41 having a larger width. Therefore, the strength in the attachment of the rotor 34 is easily ensured. Since the width of the left housing member 41 is larger than the width of the right housing member 42, the positions of the flange portions (edge portions) 41a and 42a of the housing members 41 and 42 are shifted rightward from the center of the motor housing 40 in the left-right direction (a center C1 of the rear wheel 20 in the left-right direction). Therefore, interference between the components formed on the rim portion 21 of the rear wheel 20 and the motor housing 40 is easily prevented. In the exampled electric two-wheeled vehicle 1, an air valve 22 is attached to the rim portion 21. Interference between the air valve 22 and the edge portions 41a and 42a of the housing members 41 and 42 can be avoided.

Unlike the electric two-wheeled vehicle 1, the width of the left housing member 41 may be the same as the width of the right housing member 42, or the width of the right housing member 42 may be larger than the width of the left housing member 41. The rotor 34 may be attached to a housing member having a small width.

As illustrated in Fig. 5B, the motor housing 40 includes a rotor frame 45 fixed on the inside of the left housing member 41. The rotor frame 45 is welded to the inside of the left housing member 41, for example. The rotor frame 45 has an annular shape surrounding the axle 31, and the plurality of permanent magnets 34a forming the rotor 34 are fixed on the inner peripheral surface of the rotor frame 45. Unlike the electric two-wheeled vehicle 1, the motor housing 40 may not include the rotor frame 45. That is, the permanent magnet 34a may be directly fixed to the inside of the left housing member 41.

### [Wire Layout]

As described above, the stator 33 includes the coil 33b. As illustrated in Fig. 5B, an electric cable 35 including a plurality of electric wires connected to the coil 33b is placed in the motor housing 40. The electric wire is connected to the coil 33b via a bus bar 33c attached to the stator 33. The electric motor 30 includes a sensor (not illustrated) for detecting the rotational position of the rotor 34, a sensor substrate 36 connected to the sensor, and a holder 33f that holds the sensor substrate 36. The electric cable 35 may also include electric wires extending from this sensor substrate 36. The structure of connecting the electric cable 35 and the coil 33b and the structure of supporting the sensor substrate 36 are not limited to the examples illustrated in the drawings. For example, the electric wire of the cable 35 may be directly connected to the coil 33b without passing through the bus bar 33c. The holder 33f may not be used to support the sensor substrate 36, but may be attached to, for example, the stator frame 32 or another member.

As illustrated in Fig. 5B, a cable passage (through-hole) 31b extending in the left-right direction (axial direction) is formed in the axle 31. One end 31c of the cable passage 31b is opened in the motor housing 40. The other end 31d (see Fig. 5A) of the cable passage 31b is opened outside the motor housing 40 (hereinafter, the end 31c is referred to as a "motor-side opening end", and the end 31d is referred to as a "battery-side opening end"). As will be described later in detail, a component housing 70H is provided on the left of the motor housing 40, and the battery-side opening end 31d is opened in the component housing 70H. The electric cable 35 passes through the cable passage 31b and pulled out from the inside of the motor housing 40 to the outside.

As illustrated in Fig. 5B, the motor-side opening end 31c is located on the outer peripheral surface of the axle 31. The cable passage 31b includes a straightaway portion 31e extending linearly in the axial direction and an inclined portion 31g formed obliquely with respect to both the axial direction and the radial direction (direction orthogonal to the axial direction). The inclined portion 31g extends obliquely from the straightaway portion 31e toward the motor-side opening end 31c. With the structure of the cable passage 31b, since the angle of the bent portion of the electric cable 35 is smaller than 90 degrees, it is easy to pass the electric cable 35 through the cable passage 31b.

As described above, the stator frame 32 includes the fixed portion 32a fixed to the outer peripheral surface of the axle 31. The left end 31r of the axle 31 is supported by the axle holding portion 72a of the rear arm 70. The motor-side opening end 31c is located on the opposite side of the axle holding portion 72a across the fixed portion 32a. With such structure, since the motor-side opening end 31c does not interfere with the axle holding portion 72a, the position of the axle holding portion 72a can be brought closer to the fixed portion 32a of the stator frame 32. In other words, the position of the right end of the axle holding portion 72a can be brought closer to the center C1 of the rear wheel 20 in the left-right direction. As a result, the supporting strength of the axle 31 by the axle holding portion 72a can be increased. In the exampled electric two-wheeled vehicle 1, the bearing 61 that supports the motor housing 40 is placed between the fixed portion 32a and the axle holding portion 72a. The bearing 61 and the axle holding portion 72a are brought close to the fixed portion 32a of the stator frame 32. The position of the motor-side opening end 31c is not limited to the example of the electric two-wheeled vehicle 1. The motor-side opening end 31c may be formed between the bearing 61 and the fixed portion 32a of the stator frame 32.

The electric motor 30 includes the sensor substrate 36 as described above. As illustrated in Fig. 5B, the sensor substrate 36 is located to the right of the stator 33, like the motor-side opening end 31c. Unlike the electric two-wheeled vehicle 1, the sensor substrate 36 may be placed to the left of the stator 33.

### [Component Housing]

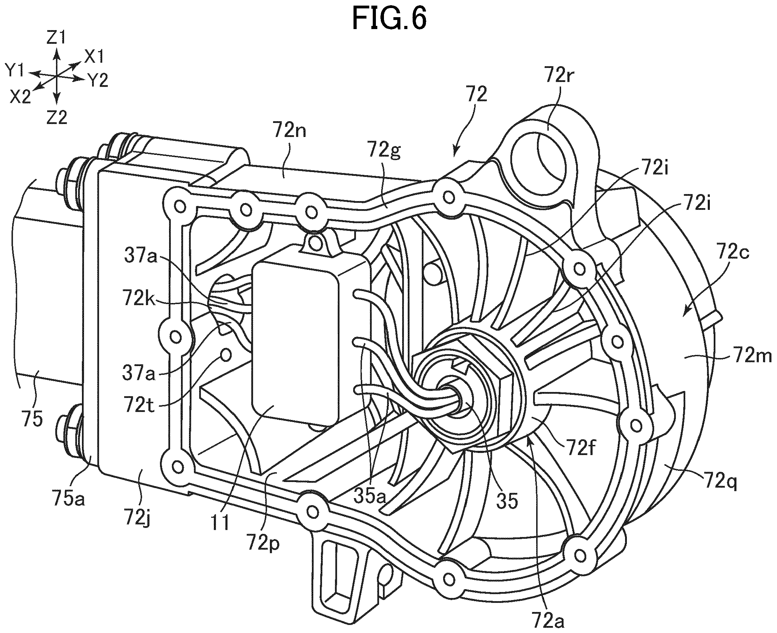

The left arm 71 of the rear arm 70 includes the axle holding portion 72a that holds the axle 31. The axle holding portion 72a has a cylindrical shape, and the axle 31 is inserted into the axle holding portion 72a. The left arm 71 includes, at the rear portion thereof, the component housing 70H (see Fig. 5A) located to the left of the motor housing 40. Therefore, the component housing 70H moves up and down together with the axle 31 with respect to the vehicle body frame. The battery-side opening end 31d of the cable passage 31b is located inside the component housing 70H. With such structure, it is possible to prevent water and soil from entering the motor housing 40 through the cable passage 31. Since the component housing 70H is a part of the rear arm 70, an increase in the number of components can be avoided. As illustrated in Fig. 6, in the electric two-wheeled vehicle 1, the battery-side opening end 31d is formed on the end surface of the axle 31 (the surface facing the left). Unlike the electric two-wheeled vehicle 1, the battery-side opening end 31d may be formed on the outer peripheral surface of the axle 31 like the motor-side opening end 31c.

As illustrated in Fig. 6, an electric component 11 is accommodated in the component housing 70H. The electric component 11 is, for example, a component disposed on the electric path between the electric motor 30 and a battery (not illustrated) that supplies electric power to the electric motor 30. More specifically, the electric component 11 is a terminal block that connects, for example, a terminal provided at an end of an electric wire 35a of the electric cable 35 and a terminal of an electric wire 37a extending from the battery. The electric component 11 may be a motor driving device including an inverter that converts direct current supplied from the battery into alternating current to supply the alternating current to the electric motor 30.

By placing the electric component placed in the electric path between the electric motor 30 and the battery in the component housing 70H, the cable electrically connecting the battery and the electric motor 30 can be shortened. For example, if the motor driving device is placed at a position different from the rear arm 70 (for example, the lower side of the seat 5), it is necessary to divert the electric cable toward the motor driving device. On the other hand, when the motor driving device is placed in the component housing 70H, the cable can be disposed on a path that is close to the shortest distance from the battery to the electric motor 30. The electric component 11 is not limited to the terminal block or the motor driving device. A plurality of electric components may be placed in the component housing 70H.

As illustrated in Fig. 5A, in the exampled electric two-wheeled vehicle 1, the component housing 70H includes the arm rear member 72 and a cover member 73. The arm rear member 72 has a box shape that opens to the left. The cover member 73 is placed to the left of the arm rear member 72 and closes the opening of the arm rear member 72. The arm rear member 72 and the cover member 73 are joined together in the left-right direction. The left edge portion of the arm rear member 72 and the right edge portion 73a of the cover member 73 are fixed to each other by a fixing tool such as a screw or a bolt. The axle holding portion 72a is formed on the arm rear member 72.

A seal member 72g (see Fig. 6) is provided between the arm rear member 72 and the cover member 73 to seal therebetween. As a result, it is possible to prevent water from entering the inside of the component housing 70H. That is, the accommodation chamber of the component housing 70H is also partitioned from the outside, like the accommodation chamber of the motor housing 40. The sealing material 72g is applied to the left edge portion of the arm rear member 72, for example. The sealing material 72g may be an O-ring or a gasket attached to the left edge portion of the arm rear member 72.

As illustrated in Fig. 5A, the arm rear member 72 includes a side wall portion 72b placed along the motor housing 40 and intersecting with the axle holding portion 72a, and a peripheral wall portion 72c surrounding the axle 31 in a side view. A brake device 80 is placed between the component housing 70H (side wall portion 72b) and the motor housing 40 (left housing member 41). The placement of the brake device 80 will be described later in detail.

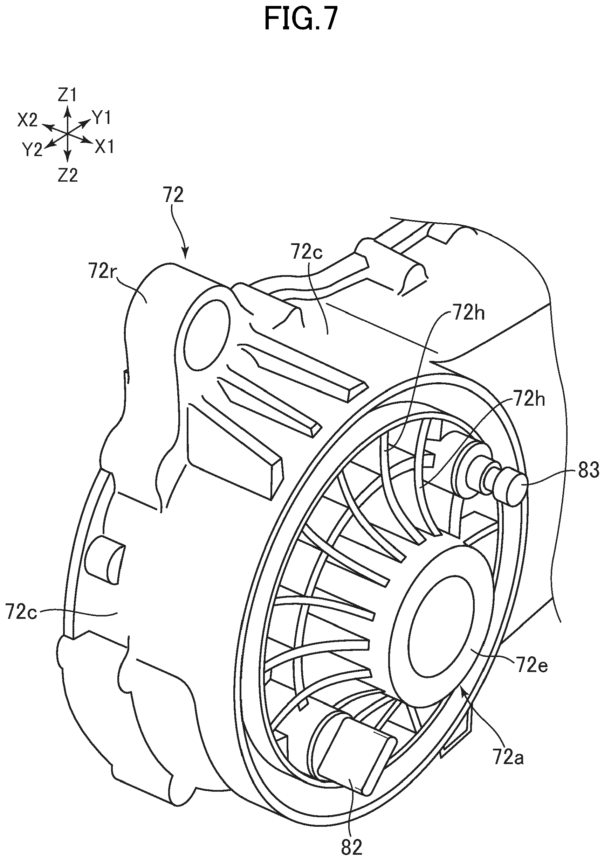

As illustrated in Fig. 7, the axle holding portion 72a includes a right protruding portion 72e protruding rightward from the side wall portion 72b. The arm rear member 72 includes a plurality of ribs 72h formed on the outer peripheral surface of the right protruding portion 72e. The plurality of ribs 72h are arranged in the circumferential direction of the axle 31. The rib 72h is substantially parallel to the axle 31 and is connected to the outer peripheral surface of the right protruding portion 72e, the right surface of the side wall portion 72b, and the peripheral wall portion 72c. The rib 72h can increase the strength of the axle holding portion 72a against the force acting from the axle 31 to the axle holding portion 72a. In the exampled electric two-wheeled vehicle 1, since the rear arm 70 does not support the right end 31a of the axle 31, the structure for increasing the strength of the right protruding portion 72e of the axle holding portion 72a is particularly effective.

As illustrated in Fig. 6, the axle holding portion 72a includes a left protruding portion 72f protruding leftward from the side wall portion 72b. The arm rear member 72 includes a plurality of ribs 72i formed on the outer peripheral surface of the left protruding portion 72f. Like the rib 72h, the plurality of ribs 72i are arranged in the circumferential direction of the axle 31. The rib 72i is substantially parallel to the axle 31 and is connected to the outer peripheral surface of the left protruding portion 72f, the left surface of the side wall portion 72b, and the peripheral wall portion 72c. The rib 72i can further increase the strength against the force acting from the axle 31 to the axle holding portion 72a.

As illustrated in Fig. 5A, the length of the left protruding portion 72f is larger than the length of the right protruding portion 72e. Therefore, the side wall portion 72b is located to the right of a center C2 of the axle holding portion 72a in the left-right direction. As a result, the position of the side wall portion 72b approaches the center C1 of the rear wheel 20 in the left-right direction, and thus the support strength of the axle 31 by the rear arm 70 can be further improved.

As illustrated in Fig. 2, the left arm 71 includes an arm front member 75 extending rearward from the pivot shaft 9. In the exampled electric two-wheeled vehicle 1, the component housing 70H is connected to the rear side of the arm front member 75. The arm front member 75 includes a plate-shaped attaching portion 75a at the rear end thereof. The component housing 70H is attached to the attaching portion 75a. In the exampled electric two-wheeled vehicle 1, the arm rear member 72 includes a front wall portion 72j (see Fig. 6) . The front wall portion 72j is connected to the attaching portion 75a by a fixing tool such as a screw or a bolt. The rear arm member 72 and the front arm member 75 may be made of the same material or different materials. For example, the rear arm member 72 may be made of aluminum, and the front arm member 75 may be made of iron, for example.

The structure of the left arm 71 is not limited to the example of the electric two-wheeled vehicle 1. For example, the arm rear member 72 and the arm front member 75 may be integrally formed. That is, the arm rear member 72 and the arm front member 75 may not be connected to each other by a fixing tool, but may be single member formed by casting, for example.

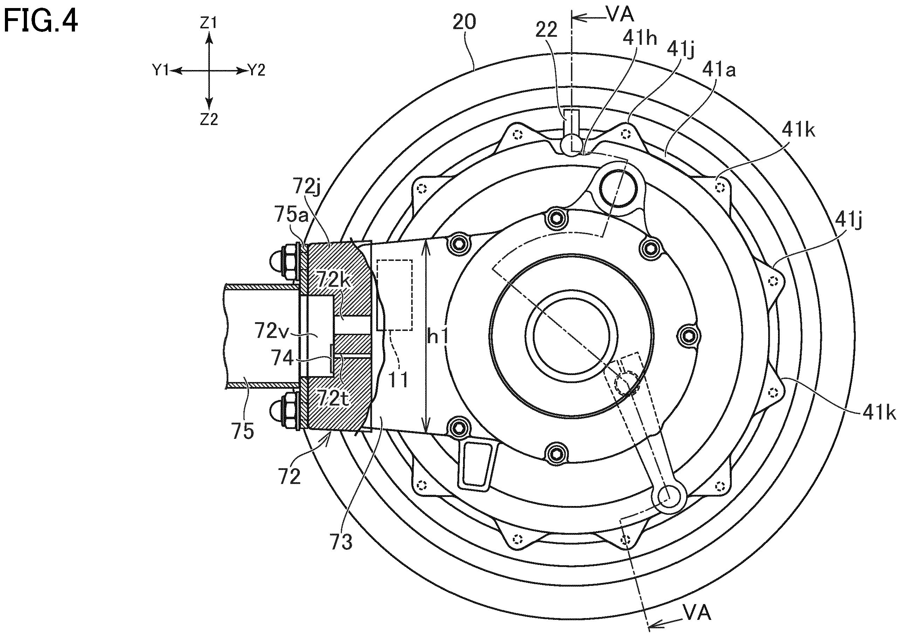

In the exampled electric two-wheeled vehicle 1, the arm front member 75 is a tubular member. As illustrated in Fig. 4, the accommodation chamber inside the component housing 70H and the inside of the arm front member 75 are connected to each other. In the exampled electric two-wheeled vehicle 1, a hole 72k (see Figs. 4 and 6) that penetrates the front wall portion 72j in the front-rear direction is formed in the front wall portion 72j of the arm rear member 72. The attaching portion 75a of the arm front member 75 is formed in an annular shape and is attached to the front surface of the outer peripheral portion of the front wall portion 72j by a fixing tool 76 such as a bolt or a screw. A recessed portion 72v is formed inside the outer peripheral portion of the front wall portion 72j (the portion where the fixing tool 76 is attached). The electric wire 37a (see Fig. 6) extending from the electric component 11 passes through the hole 72k and the inside of the arm front member 75 and reaches the battery.

The outer wall of the component housing 70H includes ventilation holes that connect the inside to the outside. The ventilation holes can prevent the air pressure in the component housing 70H and the motor housing 40 from changing due to temperature changes. In the exampled electric two-wheeled vehicle 1, as illustrated in Fig. 4, a ventilation hole 72t is formed in the front wall portion 72j of the component housing 70H. The ventilation hole 72t connects the inside of the component housing 70H and the inside of the arm front member 75 (tubular member). A ventilation hole may be formed in the arm front member 75 for connecting the inside of the arm front member 75 and the outside (atmosphere).

It is desirable that the ventilation hole 72t be provided with a waterproof structure. A seal member 74 made of, for example, a material (fiber) having waterproofness and breathability is attached to the ventilation hole 72t. By using such a material, it is possible to appropriately maintain the pressures of the component housing 70H and the motor housing 40 while preventing water from entering the component housing 70H and the motor housing 40 from the arm front member 75. The waterproof structure is not limited to the seal member 74 and may be, for example, a pipe inserted into the ventilation hole 72t. The pipe may extend through the inside of the arm front member 75 to the inside of the exterior cover of the vehicle body and further to the lower side of the seat 5. By doing so, it is possible to prevent water from entering the component housing 70H through the pipe. The position of the ventilation hole 72t and the waterproof structure are not limited to the example of the electric two-wheeled vehicle 1.

As illustrated in Fig. 4, in the electric two-wheeled vehicle 1, the component housing 70H has a width (height) h1 in the vertical direction larger than that of the arm front member 75. As a result, sufficient capacity can be secured in the component housing 70H. As illustrated in Fig. 6, the peripheral wall portion 72c of the arm rear member 72 includes an upper wall portion 72n and a lower wall portion 72p that are located in front of the axle 31 and extend forward. As a result, sufficient capacity can be secured in the component housing 70H. In the example illustrated in Fig. 6, the electric component 11 is placed between the upper wall portion 72n and the lower wall portion 72p.

The placement of the electric component 11 and the shape of the component housing 70H are not limited to the example of the electric two-wheeled vehicle 1. For example, the component housing 70H may not include the upper wall portion 72n and the lower wall portion 72p. Here, the electric component 11 may be placed inside a curved portion 72m that is curved to surround the axle 31. In the example illustrated in Fig. 6, a recessed portion 72q is formed in the curved portion 72m, and a lever 84 for operating the brake device 80 is placed in the recessed portion 72q. However, such a recessed portion 72q may not be formed in the curved portion 72m.

The electric two-wheeled vehicle 1 includes a rear suspension 14 (see Fig. 1). As illustrated in Fig. 6, a suspension connecting portion 72r to which the lower end of the rear suspension 14 is connected is formed in the component housing 70H. In the electric two-wheeled vehicle 1, the suspension connecting portion 72r is formed on the peripheral wall portion 72c (more specifically, the curved portion 72m) of the arm rear member 72. The rib 72i described above is also connected to the inner surface of the peripheral wall portion 72c (the inner surface of the curved portion 72m). The rib 72i can improve the strength of the component housing 70H against the force acting from the suspension 14. Unlike the electric two-wheeled vehicle 1, the suspension connecting portion 72r may be formed in a portion different from the peripheral wall portion 72c of the arm rear member 72.

As described above, the cover member 73 is fixed to the arm rear member 72. In the exampled electric two-wheeled vehicle 1, the cover member 73 is made of metal. As a result, the strength of the component housing 70H against the force acting from the suspension 14 can be further improved. The material of the cover member 73 may be aluminum or iron. Unlike the electric two-wheeled vehicle 1, the cover member 73 may be made of resin.

### [Stator Frame]

As described above, the stator frame 32 includes the fixed portion 32a fixed to the axle 31 (see Fig. 5A). In the exampled electric two-wheeled vehicle 1, the fixed portion 32a has an annular shape, and the axle 31 is inserted inside thereof. The fixed portion 32a is fixed to the axle 31 to not rotate relative to the axle 31. The fixed portion 32a is welded to the outer peripheral surface of the axle 31, for example. Relative rotation between the fixed portion 32a and the axle 31 may be restricted not by welding, but by a spline formed on the inner peripheral surface of the fixed portion 32a and the outer peripheral surface of the axle 31, or by a key that engages with the inner peripheral surface of the fixed portion 32a and the outer peripheral surface of the axle 31.

As illustrated in Fig. 5B, the stator frame 32 includes, in the outer peripheral portion thereof, a stator attaching portion 32b that has an annular shape surrounding the axle 31. In the electric two-wheeled vehicle 1, the stator 33 is fixed to the outer peripheral surface of the stator attaching portion 32b. Specifically, a plurality of iron cores 33a are attached on the outer peripheral surface of the stator attaching portion 32b. The iron core 33a is welded to the outer peripheral surface of the stator attaching portion 32b, for example.

As illustrated in Fig. 5B, the stator frame 32 includes a connecting portion 32c that extends in the radial direction from the fixed portion 32a to the stator attaching portion 32b and connects both. The connecting portion 32c has, for example, a disc shape. The fixed portion 32a is formed at the center of the connecting portion 32c, and the stator attaching portion 32b is formed at the outer peripheral edge of the connecting portion 32c. The connecting portion 32c may not be disc-shaped as long as the connecting portion 32c has a shape that connects the fixed portion 32a and the stator attaching portion 32b.

As described above, the left end 31r of the axle 31 is supported by the rear arm 70, but the right end 31a is not supported by the rear arm 70. As illustrated in Fig. 5B, the fixed portion 32a of the stator frame 32 is deviated rightward from the center C1 of the rear wheel 20 in the left-right direction. That is, the center of the fixed portion 32a in the left-right direction is located to the right of the center C1 of the rear wheel 20. In the exampled electric two-wheeled vehicle 1, the entire fixed portion 32a is located to the right of the center C1 and does not intersect with a plane passing through the center C1 (a plane orthogonal to the axle 31). With such structure, the right end of the axle holding portion 72a of the rear arm 70 supporting the axle 31 can be brought close to the center C1 of the rear wheel 20. As a result, the support strength of the axle 31 by the axle holding portion 72a can be improved. As described above, the axle holding portion 72a includes the right protruding portion 72e protruding rightward from the side wall portion 72b. The right end (the end of the right protruding portion 72e) of the axle holding portion 72a is located substantially at the center of the axle 31 in the axial direction.

The positional relationship between the fixed portion 32a and the center C1 of the rear wheel 20 is not limited to the example of the electric two-wheeled vehicle 1. For example, the fixed portion 32a may intersect with a plane passing through the center C1 (a plane orthogonal to the axle 31). Contrary to the electric two-wheeled vehicle 1, the rear arm 70 may support the right end 31a of the axle 31 and may not support the left end 31r. In that structure, the fixed portion 32a of the stator frame 32 may be deviated leftward from the center C1 of the rear wheel 20.

In the exampled electric two-wheeled vehicle 1, the right end of the fixed portion 32a is located further leftward than the right end of the stator 33, and thus the entire fixed portion 32a is located inward of the stator 33 in the radial direction. Unlike the exampled the electric two-wheeled vehicle 1, the right end of the fixed portion 32a may be located further rightward than the right end of the stator 33.

As illustrated in Fig. 5B, the stator 33 is located further leftward than the fixed portion 32a of the stator frame 32. As a result, the positional displacement between the stator 33 and the rear wheel 20 in the left-right direction can be reduced. As a result, it is possible to prevent the electric motor 30 and the motor housing 40 from greatly protruding to the right of the rear wheel 20. In the exampled electric two-wheeled vehicle 1, the position of the stator 33 in the left-right direction matches the rear wheel 20. That is, the center of the stator 33 in the left-right direction is located at the center C1 of the rear wheel 20. Unlike the exampled electric two-wheeled vehicle 1, the center of the stator 33 in the left-right direction may be located to the right of the center C1 of the rear wheel 20, or may be located to the left of the center C1 of the rear wheel 20.

As illustrated in Fig. 5B, the connecting portion 32c of the stator frame 32 includes an inclined portion 32e that is inclined with respect to the radial direction of the axle 31. Due to the shape of the stator frame 32, the position of the stator 33 can be located further leftward than the fixed portion 32a. The stator frame 32 does not need to include the inclined portion 32e. For example, the connecting portion 32c of the stator frame 32 may be parallel to the radial direction of the axle 31. In that structure, in order to position the stator 33 to be located further leftward than the fixed portion 32a, the end of the connecting portion 32c (the end between the connecting portion 32c and the stator attaching portion 32b) may be shifted to the right from the center of the stator 33 in the left-right direction. As still another example, the connecting portion 32c may include a step instead of the inclined portion 32e.

### [Bearing Placement]

As described above, the rotor 34 is rotatably supported by the bearings 61 and 62. As illustrated in Fig. 5B, the bearing 61 is located to the left of the fixed portion 32a of the stator frame 32, and the bearing 62 is located to the right of the fixed portion 32a of the stator frame 32 (hereinafter, the bearing 61 is referred to as a "left bearing" and the bearing 62 is referred to as a " right bearing"). The left bearing 61 is located inwardly of the stator 33 in the radial direction of the axle 31. In other words, when viewed in a direction orthogonal to the axle 31, the stator 33 overlaps with the left bearing 61. The left bearing 61 is located to the right of a plane P3 passing through the left end of the stator 33. In the exampled electric two-wheeled vehicle 1, the entire left bearing 61 is located to the right of the plane P3 passing through the left end of the stator 33.

The left bearing 61 is placed in a space obtained by shifting the fixed portion 32a to the right of the center C1 of the rear wheel 20. As a result, the right end of the axle holding portion 72a that supports the axle 31 can be brought closer to the center C1 of the rear wheel 20, and thus the support strength of the axle 31 by the axle holding portion 72a can be improved. Since the left bearing 61 is located to the right of the plane P3 passing through the left end of the stator 33, the width of the motor housing 40 and the component housing 70H in the left-right direction can be reduced. The placement of the left bearing 61 is not limited to the example of the electric two-wheeled vehicle 1. For example, only a part of the left bearing 61 may be located on the right side of the plane P3 passing through the left end of the stator 33.

As illustrated in Fig. 5B, the left bearing 61 is located to the left of the center C1 of the rear wheel 20, and the right bearing 62 is located to the right of the center C1. With such placement of the bearings 61 and 62, it is easier to secure the support strength of the electric motor 30 and the rear wheel 20 as compared with, for example, a structure in which both of the two bearings 61 and 62 are located to the right of the center C1. In the electric two-wheeled vehicle 1, the entire left bearing 61 is located to the left of the center C1 of the rear wheel 20, and the entire right bearing 62 is located to the right of the center C1.

As illustrated in Fig. 5B, the distance from the left bearing 61 to the center C1 of the rear wheel 20 is smaller than the distance from the right bearing 62 to the center C1 of the rear wheel 20. Therefore, a larger load acts on the left bearing 61 than on the right bearing 62. Therefore, the width of the left bearing 61 in the left-right direction is larger than the width of the right bearing 62 in the left-right direction. In other words, the rated load of the left bearing 61 is larger than the rated load of the right bearing 62. The "rated load" means "a load with a constant direction and size so that a rated life of 1 million rotations can be obtained."

### [Brake Device and Accommodating Recessed Portion of Housing Member]

As illustrated in Fig. 5B, the left housing member 41 includes a recessed portion 41c in a side wall portion 41f facing the component housing 70H (hereinafter, this recessed portion 41c is referred to as an "accommodating recessed portion "). The accommodating recessed portion 41c is recessed toward the inside of the motor housing 40. That is, the accommodating recessed portion 41c is recessed toward the fixed portion 32a of the stator frame 32. The accommodating recessed portion 41c includes a cylindrical wall portion 41d surrounding the axle 31 in a side view, and a wall portion 41e extending from the wall portion 41d toward the axle 31 (the wall portion 41d is referred to as a "cylindrical wall portion", and the wall portion 41e is referred to as an " inner wall portion "). The accommodating recessed portion 41c is formed at a position where the axle 31 is placed. That is, the opening through which the axle 31 passes is formed in the inner wall portion 41e. The seal member 44 and the left bearing 61 are provided in the inner wall portion 41e. The inner wall portion 41e is located inside the stator 33 in the radial direction of the axle 31.

As described above, the brake device 80 that applies the braking force to the rear wheel 20 is placed between the motor housing 40 and the component housing 70H. As illustrated in Fig. 5A, the brake device 80 is placed inside the accommodating recessed portion 41c. That is, at least a part of the brake device 80 is placed inwardly of the cylindrical wall portion 41d of the accommodating recessed portion 41c in the radial direction. The placement of the brake device 80 can reduce the size of the mechanism (the mechanism including the brake device 80 and the electric motor 30) provided on the axle 31 in the left-right direction.

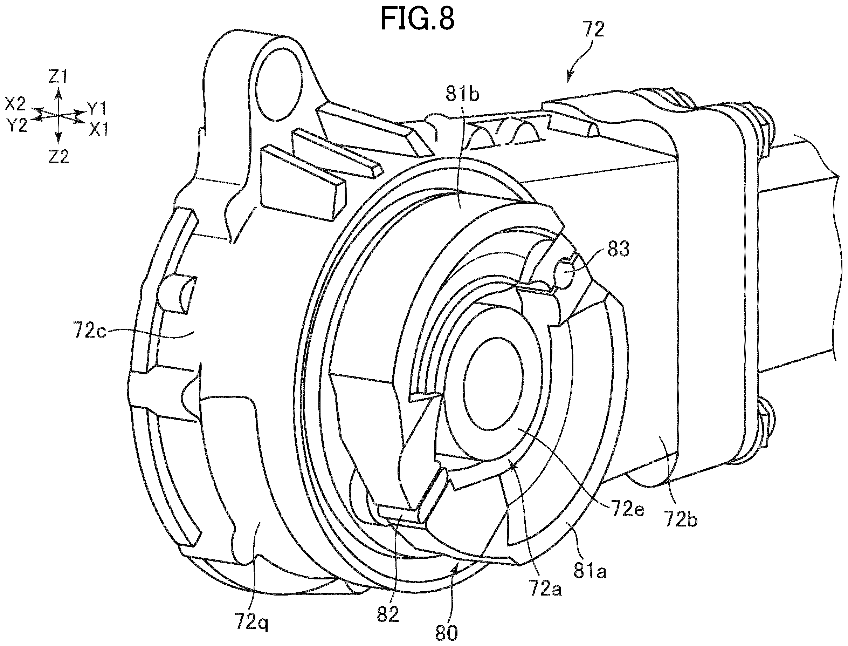

In the electric two-wheeled vehicle 1, the brake device 80 is a drum brake device. The brake device 80 includes a pair of brake shoes 81a and 81b (see Fig. 8) and a cam 82 (see Figs. 5A and 8) that pushes and spreads the brake shoes 81a and 81b outward in the radial direction. As illustrated in Fig. 5A, the cam 82 includes a shaft portion 82a. The shaft portion 82a is held by the side wall portion 72b of the arm rear member 72. A lever 84 is attached to the end of the shaft portion 82a. The lever 84 is connected to an operation member (for example, a lever provided on the handlebar 4) operable by the rider via a wire (not illustrated) . The brake shoes 81a and 81b are supported by a support shaft 83 (see Fig. 8) held by the side wall portion 72b of the arm rear member 72.

As illustrated in Figs. 5A and 5B, the brake shoes 81a and 81b, and the cam 82 are placed inside the accommodating recessed portion 41c. By the action of the cam 82, the brake shoes 81a and 81b are pushed and spread toward the cylindrical wall portion 41d of the accommodating recessed portion 41c. In the exampled electric two-wheeled vehicle 1, a cylindrical friction material 48 against which the brake shoes 81a and 81b are pressed to is fixed to the inner peripheral surface of the cylindrical wall portion 41d. Unlike the electric two-wheeled vehicle 1, the friction material 48 may not be provided on the inner peripheral surface of the cylindrical wall portion 41d, and the brake shoes 81a and 81b may contact the inner peripheral surface of the cylindrical wall portion 41d.

Thus, the brake device 80 is placed inside the accommodating recessed portion 41c, and as a result, a part of the brake device 80 is located inwardly of the stator 33 in the radial direction of the axle 31. That is, when viewed in a direction orthogonal to the axle 31, a part of the brake device 80 overlaps with the stator 33. More specifically, a part of the brake shoes 81a and 81b overlaps with the coil 33b. The left bearing 61 is located further rightward than the brake device 80. With such placement, the size of the mechanism (the mechanism including the brake device 80 and the electric motor 30) provided on the axle 31 in the left-right direction can be reduced.

As described above, the right protruding portion 72e of the axle holding portion 72a protrudes from the side wall portion 72b of the arm rear member 72 toward the motor housing 40. As illustrated in Fig. 5B, in the electric two-wheeled vehicle 1, the right protruding portion 72e is located in the accommodating recessed portion 41c. Specifically, the right protruding portion 72e is located inwardly of the cylindrical wall portion 41d of the accommodating recessed portion 41c in the left-right direction. Therefore, a plane (the plane perpendicular to the axle 31) P4 passing through the end of the right protruding portion 72e intersects with the cylindrical wall portion 41d of the accommodating recessed portion 41c.

At least a part of the right protruding portion 72e is located inwardly of the brake device 80 in the radial direction of the axle 31. Specifically, when viewed in a direction orthogonal to the axle 31, at least a part of the right protruding portion 72e overlaps with the brake shoes 81a and 81b. With such placement, since the right end of the axle holding portion 72a is close to the center C1 of the rear wheel 20, the support strength of the axle 1 by the axle holding portion 72a can be increased. As illustrated in Fig. 5B, the right protruding portion 72e abuts the annular member 31f that supports the seal member 44.

The structure of the left housing member 41 and the placement of the brake device 80 are not limited to the example of the electric two-wheeled vehicle 1. Unlike the electric two-wheeled vehicle 1, for example, the accommodating recessed portion 41c may not be formed in the left housing member 41. In that structure, the brake device 80 may be located to the left of the side wall portion 41f of the left housing member 41.

The left housing member 41 of the motor housing 40 and the side wall portion 72b of the arm rear member 72 have a labyrinth structure that reduces water entering the accommodating recessed portion 41c. Specifically, as illustrated in Fig. 5B, the left housing member 41 includes a convex portion 41g that further protrudes from the cylindrical wall portion 41d of the accommodating recessed portion 41c toward the arm rear member 72. The convex portion 41g has a ring shape surrounding the axle 31 in a side view. On the other hand, a recessed portion 72s is formed in the side wall 72b of the arm rear member 72. The convex portion 41g is located inside the recessed portion 72s. Since the gap between the inner surface of the recessed portion 72s and the convex portion 41g is bent, it is possible to reduce the amount of water entering the accommodating recessed portion 41c from the outside. That is, the convex portion 41g and the recessed portion 72s form a labyrinth structure.

As illustrated in Fig. 5B, a seal member 39a is placed between the outer peripheral surface of the axle 31 and the inner peripheral surface of the annular member 31f. A seal member 39b is also placed between the inner peripheral surface of the right protruding portion 72e of the axle holding portion 72a and the outer peripheral surface of the axle 31. With the seal members 39a and 39b, it is possible to prevent the water that has passed through the labyrinth structure and entered the accommodating recessed portion 41c from entering the motor housing 40 and the component housing 70H.

### [Attaching Structure of Rear Wheel and Motor Housing]

As described above, the motor housing 40 includes the left housing member 41 and the right housing member 42 that are joined together in the left-right direction. The motor housing 40 is provided with a first fixing tool (bolts or screws) for fixing the left and right housing members 41 and 42 to each other and a second fixing tool (bolts or screws), which is different from the first fixing tool, for fixing the rear wheel 20 to the motor housing 40. Therefore, the rear wheel 20 can be removed from the motor housing 40 while maintaining the state where the left housing member 41 and the right housing member 42 are joined together. As a result, workability of works such as tire maintenance work can be improved. As described above, the motor housing 40 is provided with the seal members 43 and 44. That is, the motor housing 40 is sealed in order to prevent water from entering the inside thereof. The rear wheel 20 can be removed from the motor housing 40 while maintaining the state where the left housing member 41 and the right housing member 42 are sealed.

As illustrated in Fig. 3, the left housing member 41 includes a plurality of attaching portions 41j arranged along the right edge thereof at intervals in the circumferential direction of the axle 31. The right housing member 42 includes a plurality of attaching portions 42c arranged along the left edge thereof at intervals in the circumferential direction of the axle 31 (hereinafter, the attaching portions 41j and 42c will be referred to as "housing attaching portions"). In the exampled electric two-wheeled vehicle 1, the housing attaching portions 41j and 42c protrude more in the radial direction than the flange portions 41a and 42a formed on the edges of the housing members 41 and 42. Unlike the electric two-wheeled vehicle 1, the housing attaching portions 41j and 42c may not protrude in the radial direction.

The housing attaching portion 41j of the left housing member 41 is attached to the housing attaching portion 42c of the right housing member 42 by the fixing tools 49 (see Fig. 3, for example, screws) inserted in the left-right direction. In the electric two-wheeled vehicle 1, a screw hole is formed in the housing attaching portion 41j of the left housing member 41, and a through-hole is formed in the housing attaching portion 42c of the right housing member 42. The fixing tools 49 are inserted into the holes of the housing attaching portions 41j and 42c from the right side to fix the left housing member 41 and the right housing member 42 to each other. The inserting direction of the fixing tools 49 is not limited to the example of the electric two-wheeled vehicle 1. That is, the housing attaching portions 41j and 42c may be formed so that the fixing tools 49 are inserted from the left side thereof.

As illustrated in Fig. 3, the motor housing 40 includes a plurality of attaching portions 41k to which the rear wheel 20 is attached (hereinafter, the attaching portions 41k are referred to as "wheel attaching portions"). The plurality of wheel attaching portions 41k are arranged at intervals in the circumferential direction of the axle 31. In the exampled electric two-wheeled vehicle 1, like the housing attaching portions 41j and 42c, the wheel attaching portion 41k protrudes more in the radial direction than the flange portions 41a and 42a. Unlike the electric two-wheeled vehicle 1, the wheel attaching portion 41k may not protrude in the radial direction. In the electric two-wheeled vehicle 1, the wheel attaching portion 41k is formed in the left housing member 41. The plurality of wheel attaching portions 41k and the plurality of housing attaching portions 41j are alternately arranged in the circumferential direction of the axle 31.

The rear wheel 20 includes an attaching hole 21b at a position corresponding to the wheel attaching portion 41k, and a fixing tool 47 (see Fig. 5A) is inserted into the attaching hole 21b. As a result, the rear wheel 20 is attached to the motor housing 40. Therefore, by removing the fixing tool 47 from the wheel attaching portion 41k, the rear wheel 20 can be removed from the motor housing 40 while maintaining the state where the left housing member 41 and the right housing member 42 are joined together.

As described above, the rear arm 70 does not include a portion located at the right side of the rear wheel 20. In the electric two-wheeled vehicle 1, the fixing tool 47 that attaches the rear wheel 20 to the motor housing 40 is inserted into the screw hole of the wheel attaching portion 41k from the right side of the attaching hole 21b of the rear wheel 20, like the fixing tool 49. Therefore, the work of removing the fixing tool 47 can be easily performed. In the exampled electric two-wheeled vehicle 1, the right housing member 42 includes an attachment portion 42e formed at a position corresponding to the wheel attaching portion 41k of the left housing member 41, and a hole is formed in the attachment portion 42e. The fixing tool 47 is also inserted into the hole of the attachment portion 42e. The right housing member 42 may not include such an attachment portion 42e.

As illustrated in Fig. 5A, the rear wheel 20 includes an attached portion 21a that protrudes inward in the radial direction from the rim portion 21. The plurality of attaching holes 21b described above are formed in the attached portion 21a. In the electric two-wheeled vehicle 1, the attached portion 21a is annular in a side view. The motor housing 40 is fitted inside the attached portion 21a. The rear wheel 20 is fitted on the right side of the motor housing 40. The attached portion 21a is located to the right of the flange portion 42a of the right housing member 42 and abuts the flange portion 42a. Therefore, the rear wheel 20 can be removed from the motor housing 40 to the right side.

As described above, the attached portion 21a of the rear wheel 20 is annular. When the rear wheel 20 is attached to the motor housing 40, the attached portion 21a is located to the right of the housing attaching portions 41j and 42c. That is, when the rear wheel 20 and the motor housing 40 are viewed from the right side, the fixing tool 49 (see Fig. 3) inserted in the housing attaching portions 41j and 42c are covered by the attached portion 21a of the rear wheel 20, and are not exposed to the right. Therefore, when the operator removes the rear wheel 20 from the motor housing 40, it is possible to prevent the fixing tools 49 (see Fig. 3) inserted into the housing attaching portions 41j and 42c from being accidentally removed.

The structure for attaching the rear wheel 20 to the motor housing 40 is not limited to the example of the electric two-wheeled vehicle 1. For example, instead of the left housing member 41, a wheel attaching portion including a screw hole may be formed in the right housing member 42. In another example, the attached portion 21a of the rear wheel 20 may not be annular. For example, the rear wheel 20 may include a plurality of attached portions 21a arranged at intervals in the circumferential direction of the axle 31, and the attaching holes 21b may be formed in each of the attached portions 21a. As still another example, the wheel attaching portion 41k may not be formed along the edges of the housing members 41 and 42.

### [Air Valve]

As illustrated in Fig. 5B, the rear wheel 20 includes the air valve 22 for introducing air into the rear tire 13. The air valve 22 protrudes from the rim portion 21 inwardly in the radial direction. As described above, the seal member 43 is provided between the flange portions 41a and 42a of the left and right housing members 41 and 42. The connecting portion 21c between the air valve 22 and the rim portion 21 is located to the left of the seal member 43. In the electric two-wheeled vehicle 1, the connecting portion 21c of the air valve 22 is located at the center of the rim portion 21 in the left-right direction. The air valve 22 is bent and extends leftward from the connecting portion 21c. With the structure, the air valve 22 and the seal member 43 do not intersect. Therefore, for example, as compared with the case where the seal member 43 and the air valve 22 intersect (that is, where the air valve 22 extends to the right), it is easy to secure sufficient radii of the motor housing 40 and the electric motor 30, and high output torque can be obtained from the electric motor 30.

As illustrated in Fig. 5A, an outer diameter R1 of the flange portions 41a and 42a of the left and right housing members 41 and 42 is larger than a distance L1 from the centerline of the axle 31 to the air valve 22. Therefore, a part of the air valve 22 overlaps with the flange portions 41a and 42a in a side view of the rear wheel 20. With such positional relationship, the electric motor 30 can have a sufficient diameter.

As illustrated in Fig. 4, a groove 41h corresponding to the position of the air valve 22 is formed on the outer peripheral surface of the motor housing 40 (the outer peripheral surface of the left housing member 41). As a result, it is easier to secure a sufficient diameter for the electric motor 30. In the example illustrated in Fig. 4, one groove 41h is formed on the outer peripheral surface of the left housing member 41. Unlike the example of Fig. 4, a plurality of grooves 41h may be formed on the outer peripheral surface of the left housing member 41, and each groove 41h may be formed between two adjacent housing mounting portions 41j and wheel attaching portions 41k. In that structure, the air valve 22 can be placed in any groove 41h.

As illustrated in Fig. 5B, an end (cap) 22a of the air valve 22 is located to the left of a left edge 41i (corner of the left housing member 41) of the outer peripheral surface of the left housing member 41. With the structure, when the tire 13 is inflated with the rear wheel 20 attached to the motor housing 40, interference between the tip of the tube extending from an air pump and the outer peripheral surface of the left housing member 41 is prevented. Since the air valve 22 extends to the left arm 71 side of the rear arm 70 supporting the axle 31, it is possible to prevent the unnecessary external force from acting on the air valve 22 when the air valve 22 is not used.

### [Modification Example]

The straddled electric vehicle proposed in the present specification is not limited to the electric two-wheeled vehicle 1 described with reference to Figs. 1 to 8.

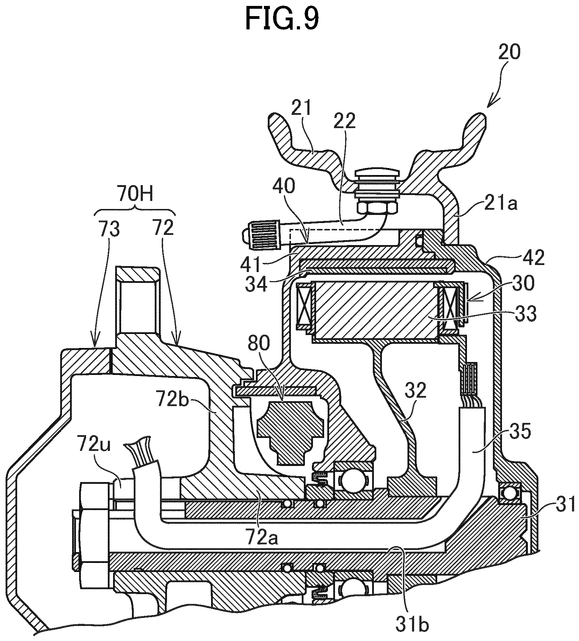

Fig. 9 is a cross-sectional view illustrating a modification example of the electric two-wheeled vehicle 1. In Fig. 9, the same portions as those described so far are denoted by the same reference numerals, and the description thereof will be omitted. The cable passage 31b is formed in the axle 31 as described above. As illustrated in Fig. 9, the battery-side opening end 31d of the cable passage 31b located in the component housing 70H may be formed on the outer peripheral surface of the axle 31. In the example of Fig. 9, the left end of the axle 31, and a part 72u of the left protruding portion 72f of the axle holding portion 72a are cut out. The electric cable 35 extends from the cutout portion into the component housing 70H.

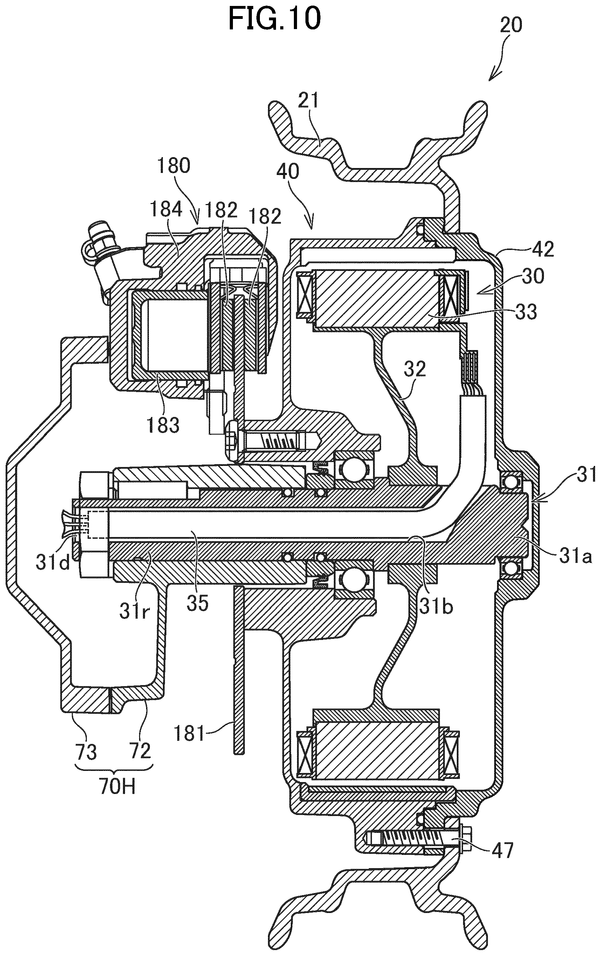

Fig. 10 is a cross-sectional view illustrating another modification example of the electric two-wheeled vehicle 1. In Fig. 10, the same portions as those described so far are denoted by the same reference numerals, and the description thereof will be omitted. As illustrated in Fig. 10, the electric two-wheeled vehicle 1 may include a brake device 180. The brake device 180 is a disc brake device, and includes a disc 181 that is attached to the left housing member 41 of the motor housing 40, a pad 182 sandwiching the disc 181, a piston 183, and a caliper 184. The caliper 184 is attached to the component housing 70H, for example.

### [Summary]

(1) As described above, the electric two-wheeled vehicle 1 includes the rear arm 70 that supports the left end 31r of the axle 31 and does not support the right end 31a of the axle 31, and the electric motor 30 that includes the stator frame 32 including the affixed portion 32a affixed to the axle 31, the stator 33 supported by the stator frame 32, and the rotor 34 rotatably supported by the axle 31 and connected to the rear wheel 20 to rotate integrally with the rear wheel 20, and the fixed portion 32a of the stator frame 32 is shifted rightward from the center C1 of the rear wheel 20 in the left-right direction. Accordingly, since one of the two ends of the axle 31 (the right end 31a and the left end 31r) is not supported by the rear arm 70, it is possible to obtain a straddled electric vehicle that is superior to the vehicle of the related art in terms of maintenance workability and manufacturing cost. Since the fixed portion 32a of the stator frame 32 is shifted to the right (the direction with an end not supported by the rear arm 70), the portion of the rear arm 70 supporting the axle 31 can be brought closer to the center C1 of the rear wheel 20 in the left-right direction. As a result, it is easy to increase the support strength of the axle 31.
(2) The rotor 34 is fixed on the inside of the motor housing 40, and the rear wheel 20 is fixed on the outside of the motor housing 40.
(3) The stator 33 is located further leftward than the fixed portion 32a of the stator frame 32. Accordingly, the positional deviation between the stator 33 and the rear wheel 20 in the left-right direction can be reduced. As a result, it is possible to prevent the electric motor 20 and the motor housing 40 from greatly protruding to the right of the rear wheel 20.
(4) The electric two-wheeled vehicle 1 includes the left bearing 61 which is located to the left of the fixed portion 32a of the stator frame 32 and which rotatably supports the rotor 34. At least a part of the left bearing 61 is located inwardly of the stator 33 in the radial direction of the axle 31. As a result, the size of the mechanism (including the electric motor 30) provided on the axle 31 in the left-right direction can be reduced.
(5) The electric two-wheeled vehicle 1 includes the right bearing 62 which is located to the right of the fixed portion 32a of the stator frame 32 and which rotatably supports the rotor 34. The left bearing 61 is located to the left of the center C1 of the rear wheel 20 in the left-right direction, and the right bearing 62 is located to the right of the center C1 of the rear wheel 20 in the left-right direction. Accordingly, it is possible to prevent the load from acting on only one of the two bearings.
(6) The distance from the left bearing 61 to the center C1 of the rear wheel 20 in the left-right direction is smaller than the distance from the right bearing 62 to the center C1 of the rear wheel 20 in the left-right direction. The width of the left bearing 61 in the left-right direction is larger than the width of the right bearing 62 in the left-right direction. Accordingly, the left bearing 61 can receive a large load.
(7) The rear arm 70 includes the axle holding portion 72a that supports the left end 31r of the axle 31, and a plurality of ribs 72i and 72h are formed on the outer peripheral surface of the axle holding portion 72a. According to the vehicle, the support strength of the axle 31 can be increased.
(8) The rear arm 70 includes the axle holding portion 72a that supports the left end 31r of the axle 31, the motor housing 40 includes the wall portion 41f facing the left, the wall portion 41f of the motor housing 40 includes the accommodating recessed portion 41c, and the right end of the axle holding portion 72a is located inside the accommodating recessed portion 41c of the motor housing 40. Accordingly, since the position of the right end of the axle holding portion 72 can be brought close to the center C1 of the rear wheel 20 in the left-right direction, the support strength of the axle 31 can be increased.
(9) The rear arm 70 includes the axle holding portion 72a supporting the left end 31r of the axle 31, and the side wall portion 72b on which the axle holding portion 72a is formed and through which the axle 31 passes, and the side wall portion 72b is located to the right of the center of the axle holding portion 72a in the left-right direction. Accordingly, since the position of the side wall portion 72b can be brought closer to the center C1 of the rear wheel 20 in the left-right direction, the support strength of the axle can be increased.
(10) The electric two-wheeled vehicle 1 includes the brake device 80 placed on the left of the electric motor 30, the rear arm 70 includes the axle holding portion 72a supporting the left end 31r of the axle 31, and a part of the axle holding portion 72a overlaps with the brake device 80 when viewed in a direction orthogonal to the axle 31. Since the position of the right end of the axle holding portion 72a is close to the center C1 of the rear wheel 20 in the left-right direction, the support strength of the axle can be increased.
(11) The electric two-wheeled vehicle 1 includes the brake device 80 placed on the left of the electric motor 30, and at least a part of the brake device 80 is located inwardly of the stator 33 in the radial direction of the axle 31. The size of the mechanism (the mechanism including the electric motor 30 and the brake device 80) provided on the axle 31 in the left-right direction can be reduced.
(12) The electric two-wheeled vehicle 1 includes the brake device 80 placed on the left of the motor housing 40. The motor housing 40 includes the wall portion 41f facing the left, the wall portion 41f of the motor housing 40 includes the accommodating recessed portion 41c, and at least a part of the brake device 80 is located in the accommodating recessed portion 41c of the wall portion 41f of the motor housing 40. The size of the mechanism (the mechanism including the electric motor 30 and the brake device 80) provided on the axle 31 in the left-right direction can be reduced.
(13) The electric two-wheeled vehicle 1 includes the left bearing 61 that is located to the left of the fixed portion 32a of the stator frame 32 and rotatably supports the rotor 34, and at least a part of the left bearing 61 is located closer to the center C1 of the rear wheel 20 in the left-right direction than the brake device 80.
(14) The electric two-wheeled vehicle 1 includes the electric motor 30 that includes the stator frame 32 including the fixed portion 32a fixed to the axle 31, the stator 33 attached by the stator frame 32, the rotor 34 rotatably supported via the left bearing 61 and connected to the rear wheel 20 to rotate integrally with the rear wheel 20, the left bearing 61 is located to the left of the fixed portion 32a, the fixed portion 32a of the stator frame 32 is shifted rightward from the center C1 of the rear wheel 20 in the left-right direction, and at least a part of the left bearing 61 overlaps with the stator 33 when viewed in a direction orthogonal to the axle 31. The size of the mechanism (including the electric motor 30) for driving the rear wheel 20 provided on the axle 31 in the left-right direction can be reduced. In the vehicle of (14), both ends of the axle 31 may be supported by the rear arm 70.
(15) The electric two-wheeled vehicle 1 includes the rear wheel 20, the axle 31, the rear arm that is connected to the body frame and supports the end of the axle 31, the left bearing 61 located on the axle 31, the motor housing 40 rotatably supported by the axle 31 via the left bearing 61, and the electric motor 30 that includes the rotor 34 rotatable around the axle 31 together with the motor housing 40, the stator frame 32 fixed to the axle 31, and the stator 33 attached to the stator frame 32 and accommodated in the motor housing 40. The motor housing 40 includes the side wall portion 41f that is located to the right or the left of the electric motor 30 and covers the electric motor 30. At least a part of the left bearing 61 is located inside the stator 33 in the radial direction of the axle 31 and is located between the center C1 of a vehicle 201 in the left-right direction and the side wall portion 41f of the motor housing 40. According to the present embodiment, the width of the entire device including the electric motor 30 and the motor housing 40 in the left-right direction can be reduced.

### REFERENCE SIGNS LIST

1: electric two-wheeled vehicle, 2: front wheel, 3: front fork, 4: handlebar, 4a: grip, 5: seat, 6: foot board, 9: pivot axis, 11: electric component, 13: tire, 14: rear suspension, 20: rear wheel, 21: rim portion, 21a: attached portion, 21b: attaching hole, 21c: connection portion, 22: air valve, 30: electric motor, 31: axle, 31a: right end, 31b: cable passage, 31c: opening end, 31d: opening end,31e: straightaway portion, 31g: inclined portion, 31f: annular member, 31r: left end, 32: stator frame, 32a: fixed portion, 32b: stator attaching portion, 32c: connection portion, 32e: inclined portion, 33: stator, 33a: iron core, 33b: coil, 34: rotor, 34a: permanent magnet, 35: electric cable, 35a: electric wire, 36: sensor substrate, 37a: electric wire, 38: engaging member, 39a: seal member, 39b: seal member, 40: motor housing, 41: left housing member, 41a: flange portion, 41c: accommodating recessed portion, 41d: cylindrical wall portion, 41e: inner wall portion, 41f: side wall portion, 41h: groove, 41i: left edge, 41j: housing attaching portion, 41k: wheel attaching portion, 42: right housing member, 42a: flange portion, 42b: recessed portion, 42c: housing attaching portion, 42e: attached portion, 43: seal member, 44: seal member, 45: rotor frame, 47: fixing tool, 48: friction material, 49: fixing tool, 61: left bearing, 62: right bearing, 70: rear arm, 70H: component housing, 71: left arm, 72: arm rear member, 72i: rib, 72h: rib, 72a: shaft holding portion, 72b: side wall portion, 72c: perimeter wall, 72e: right protruding portion, 72f: left protruding portion, 72j: front wall portion, 72k: hole, 72n: upper wall portion, 72p: lower wall portion, 72q: recessed portion, 72r: suspension connection portion, 72s: recessed portion, 73: cover member, 73a: right edge portion, 75: arm front member, 75a: attaching portion, 78: connecting bar, 79: right arm, 80: brake device, 81a: brake shoe, 81b: brake shoe, 82: cam, 82a: shaft portion, 83: support shaft, 84: lever, 180: brake device, 181: disc, 182: pad, 183: piston, 184: caliper

## Claims

1. A straddled electric vehicle comprising:
a wheel;
an axle that includes a first end in a first direction which is one of right and left directions, and a second end in a second direction which is the other direction of the right and left directions;
an arm that is connected to a body frame, supports the first end of the axle, and does not support the second end of the axle; and
an electric motor that includes a stator frame including a fixed portion fixed to the axle, a stator attached to the stator frame, and a rotor rotatably supported by the axle and connected to the wheel to rotate integrally with the wheel, wherein
the fixed portion of the stator frame is shifted in the second direction from a center of the wheel in a left-right direction.

2. The straddled electric vehicle according to claim 1, further comprising:
a motor housing that accommodates the rotor and the stator and is rotatably supported by the axle, wherein
the rotor is fixed on the inside of the motor housing, and
the wheel is fixed on the outside of the motor housing.

3. The straddled electric vehicle according to claim 1 or 2, wherein
the stator is located further in the first direction than the fixed portion of the stator frame.

4. The straddled electric vehicle according to any one of claims 1 to 3, further comprising:
a first bearing that is located in the first direction of the fixed portion of the stator frame and rotatably supports the rotor, wherein
at least a part of the first bearing is located inwardly of the stator in a radial direction of the axle.

5. The straddled electric vehicle according to claim 4, further comprising:
a second bearing that is located in the second direction of the fixed portion of the stator frame and rotatably supports the rotor, wherein
the first bearing is located in the first direction of a center of the wheel in a left-right direction, and
the second bearing is located in the second direction of the center of the wheel in the left-right direction.

6. The straddled electric vehicle according to claim 5, wherein
a distance from the first bearing to the center of the wheel in the left-right direction is smaller than a distance from the second bearing to the center of the wheel in the left-right direction, and
a width of the first bearing in the left-right direction is larger than a width of the second bearing in the left-right direction.

7. The straddled electric vehicle according to any one of claims 1 to 6, wherein
the arm includes an axle holding portion supporting the first end of the axle, and a plurality of ribs are formed on an outer peripheral surface of the axle holding portion.

8. The straddled electric vehicle according to claim 2 or 3, wherein
the arm includes an axle holding portion supporting the first end of the axle,
the motor housing includes a wall portion facing the first direction,
the wall portion of the motor housing includes a recessed portion, and
an end of the axle holding portion is located inside the recessed portion of the wall portion of the motor housing.

9. The straddled electric vehicle according to any one of claims 1 to 8, wherein
the arm includes an axle holding portion supporting the first end of the axle, and a side wall portion in which the axle holding portion is formed and through which the axle passes, and
the side wall portion is located in the second direction of a center of the axle holding portion in a left-right direction.

10. The straddled electric vehicle according to any one of claims 1 to 9, further comprising:
a brake device that is placed in the first direction of the electric motor, wherein
the arm includes an axle holding portion supporting the first end of the axle, and
a part of the axle holding portion overlaps with the brake device when viewed in a direction orthogonal to the axle.

11. The straddled electric vehicle according to any one of claims 1 to 10, further comprising:
a brake device that is placed in the first direction of the electric motor, wherein
at least a part of the brake device is located inwardly of the stator in a radial direction of the axle.

12. The straddled electric vehicle according to claim 2 or 3, further comprising:
a brake device that is placed in the first direction of the motor housing, wherein
the motor housing includes a wall portion facing in the first direction,
the wall portion of the motor housing includes a recessed portion, and
at least a part of the brake device is located in the recessed portion of the wall portion of the motor housing.

13. The straddled electric vehicle according to claim 12, further comprising:
a first bearing that is located in the first direction of the fixed portion of the stator frame and rotatably supports the rotor, wherein
at least a part of the first bearing is located closer to a center of the wheel in a left-right direction than the brake device.

14. A straddled electric vehicle comprising:
a wheel;
an arm that is connected to a body frame;
an axle that is supported by the arm;
a bearing that is provided on the axle; and
an electric motor that includes a stator frame including an fixed portion fixed to the axle, a stator supported by the stator frame, and a rotor rotatably supported via the bearing and connected to the wheel to rotate integrally with the wheel, wherein
the bearing is located in a first direction which is one of a left direction and a right direction of the fixed portion,
the fixed portion of the stator frame is shifted from a center of the wheel in a left-right direction in a second direction which is the other direction of the left direction and the right direction, and
at least a part of the bearing overlaps with the stator when viewed in a direction orthogonal to the axle.

15. A straddled electric vehicle comprising:
a wheel;
an axle of the wheel;
an arm that is connected to a body frame and supports an end of the axle;
a bearing that is disposed on the axle;
a motor housing that is rotatably supported by the axle via the bearing; and
an electric motor that includes a rotor rotatable together with the motor housing around the axle, a stator frame fixed to the axle, and a stator attached to the stator frame and is accommodated in the motor housing, wherein
the motor housing includes a side wall portion located to a right or a left of the electric motor and covering the electric motor, and
at least a part of the bearing is located inside the stator in a radial direction of the axle and is located between a center of the wheel in a left-right direction and the side wall portion of the motor housing.
